# EUROPEAN PATENT APPLICATION

(11) **EP 2 570 888 A1**
(43) Date of publication of application: **20.03.2013**
(21) Application number: 11181855.5
(22) Date of filing: 19.09.2011
(51) Int. Cl.: G06F 3/01

(54) **Haptic feedback**

(71) Applicant: Nederlandse Organisatie voor Toegepast -Natuurwetenschappelijk Onderzoek TNO, 2628 VK Delft (NL)
(72) Inventor: Van Erp, Jan, 2628 VK Delft (NL); Janssen, Joris, 2628 VK Delft (NL); Toet, Alexander, 2628 VK Delft (NL)
(74) Representative: Jansen, Cornelis Marinus

(57) **Abstract**

A haptic module (1) for use in a modelling system comprises contact elements (11) for contacting a surface (200) over which the module can be moved, the contact elements being arranged for providing direction-dependent friction in response to a control signal (CS) provided by the modelling system (100). The contact elements (11), which may be constituted by wheels, may further be arranged for providing direction-dependent propulsion in response to the control signal (CS). The modelling system may comprise a transceiver unit arranged for transmitting the control signal to the module (1). The system may further comprise a touch-sensitive table which constitutes at least part of the surface (200).

## Description

The present invention relates to haptic feedback. More in particular, the present invention relates to a haptic module for use in, for example, a modelling system, to a modelling system comprising at least one such haptic module, and to a modelling method utilising at least one such haptic module.

Haptic feedback is well known. Alarm clocks cease to produce noise when a button is pressed, thus implicitly producing auditory feedback. Many electronic devices have lights that go on or off in response to pressing a button, thus providing visual feedback. Recently, touch feedback has become popular, especially in mobile consumer devices such as mobile telephones which may stop vibrating in response to user input, thus implicitly providing tactile feedback.

International Patent Application WO 2011/085242 (Qualcomm) discloses a simulation device for three-dimensional motion which uses haptic actuators. The simulated movement is displayed on a screen. There is no movement of actual objects in this Prior Art apparatus. To provide force feedback, these known haptic actuators may include a mass that may be moved in one or two directions with a particular acceleration or velocity. As the extent of the movement of the mass is necessarily limited by the dimensions of the haptic actuator, the duration of the force feedback and the length of the trajectory over which it can be experienced are also limited.

It is an object of the present invention to overcome these and other problems of the Prior Art and to provide a haptic module which provides tactile feedback, such as force feedback, over an extended range.

It is a further object of the present invention to provide a haptic feedback module which is suitable for use in modelling and/or design systems.

Accordingly, the present invention provides a haptic module for use in a modelling system, the module comprising contact elements for contacting a surface over which the module can be moved, the contact elements being arranged for providing direction-dependent friction in response to a control signal provided by the modelling system.

By providing direction-dependent friction when moving the module over the surface, tactile feedback can be given over extended trajectories. The extent of the feedback is in no way limited by the dimensions of the module, only by the length of the trajectory over which the module is moved by the user. The direction-dependency of the friction implies that the user will find it easier to move the module in one direction than in another direction. In this way, the hand of the user moving the module is guided in a more advantageous direction while avoiding less advantageous directions. Which directions are advantageous and which are less advantageous will depend on the particular model used, the direction and/or position of the module, the position of any objects and the direction and/or position of any other modules, as will be explained later.

In a preferred embodiment, the contact elements are further arranged for providing direction-dependent propulsion in response to the control signal. That is, in addition to friction (resisting the movement of the user), propulsion (assisting the movement of the user) is provided, thus further guiding the hand of the user in an advantageous direction.

The contact elements may comprise at least one wheel, preferably at least two wheels. In a particularly advantageous embodiment, a module has four wheels arranged in pairs, the two pairs having substantially orthogonal axes. However, two substantially parallel axes can also be envisaged. The contact elements may additionally, or alternatively, comprise non-rotatable support elements having a variable friction, for instance by having a variable distance to the surface and/or a variable texture. The contact elements may additionally, or alternatively, comprise spherical elements. Some or all wheels and/or other contact elements may be retractable.

The friction and/or propulsion provided by the contact elements result in tactile feedback, that is, force feedback. It is preferred, however, that the module of the present invention additionally provides other haptic feedback. Accordingly, the module of the present invention may further be provided with transducers for providing haptic output signals, for example touch signals, temperature signal, sound signals and/or olfactory signals, in response to an additional control signal. In this way, a multi-sensory feedback is provided, making it easier for a user to detect the feedback and thus improving the efficacy of the module.

The module may additionally be provided with sensors for receiving haptic input signals, for example touch signals, temperature signals, sound signals and/or olfactory signals.

The module may further be arranged for moving independently. That is, the module may be arranged for propulsion without the aid of the user. This allows the module to move in an advantageous direction and/or to an advantageous position without user intervention.

The present invention also provides a modelling and/or design system comprising a processing unit with an associated memory unit, a transceiver unit and a haptic module as defined above, the transceiver unit being arranged for transmitting a control signal to the module.

The present invention further provides a haptic modelling method comprising the steps of:
providing a system as defined above,
storing a model in the memory unit,
placing at least one object and at least one haptic module on the surface, and moving the haptic module relative to the object.

The method may comprise the step of removing at least one object from the surface. That is, when object were placed on the surface, one or more of them may be removed in order to study the effect of their removal.

The present invention additionally provides a computer program product for producing control signals in response to a position of a haptic module as defined above. A computer program product may comprise a set of computer executable instructions stored on a tangible data carrier, such as a CD or a DVD. The set of computer executable instructions, which allow a programmable computer to carry out the method as defined above, may also be available for downloading from a remote server, for example via the Internet.

The present invention will further be explained below with reference to exemplary embodiments illustrated in the accompanying drawings, in which:
Fig. 1 schematically shows a haptic module according to the present invention in side view.
Fig. 2 schematically shows a system according to the present invention, which comprises the haptic module of Fig. 1.
Fig. 3 schematically shows, in top view, a surface on which objects and the haptic module of Fig. 1 are located.

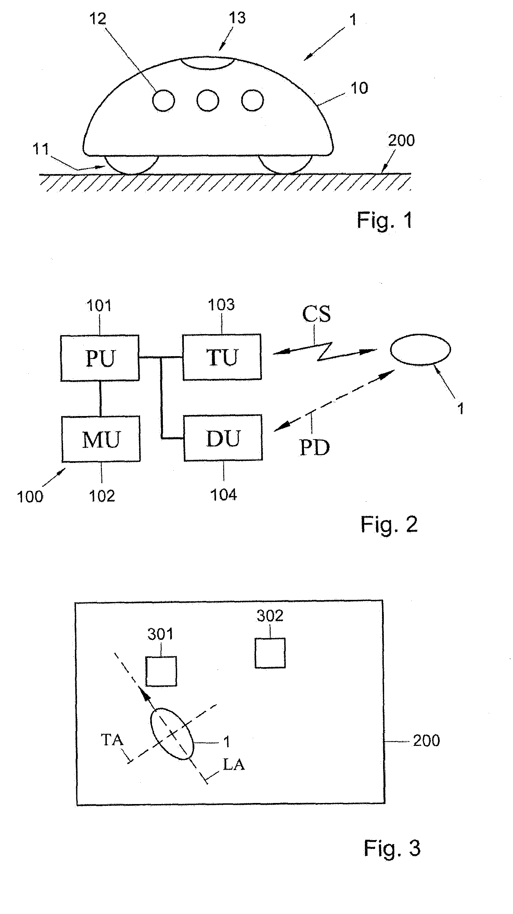

The haptic module 1 shown merely by way of non-limiting example in Fig. 1 comprises a body 10 supported by contact elements 11. The body 10 accommodates transducers 12 and sensors 13. The contact elements 11 rest on a surface 200, which may for example be a horizontal touch screen, such as the SUR40® made by Samsung.

The contact elements 11 are preferably constituted by wheels. In an advantageous embodiment, the module 1 has four wheels arranged in two pairs, the pairs having parallel axes. However, other arrangements are also feasible, such as pairs having intersecting axes (arranged at a angle of 90°, for example). Two wheels instead of four is also possible, as is a single wheel or more than four wheels, e.g. five, six or eight. Additionally, or alternatively, a single spherical element may be provided. Some or all of the contact elements 11 may be constituted by non-rotating elements such as relatively fixed supports. If non-rotating elements are used, the lower surface of these supports may have a variable friction, for example by having pins which can be extended vertically, thus providing more or less friction depending on the extension. The contact elements may additionally, or alternatively, comprise continuous tracks.

In advantageous embodiments, the contact elements 11 and/or additional feedback elements (not shown) may be arranged for providing a rotation of the module around a substantially vertical axis. Additionally, or alternatively, the roll and/or pitch of the module may be varied in dependence on control signals.

The transducers 12 may be constituted by LEDs (Light Emitting Diodes) or other light emitting elements for producing visual feedback. Additionally, or alternatively, the transducers 12 may comprise loudspeakers or similar audio elements for producing auditory feedback, vibrating members or other touch-sensitive elements for providing touch feedback, scent-producing elements for producing olfactory feedback, heat producing elements for providing temperature-related feedback, and/or other elements capable of producing feedback which can be detected by the human senses. It will be understood that more than one type of haptic feedback may be provided at any given moment, for example force feedback and auditory feedback simultaneously.

The sensors 13 are arranged for producing input signals in response to user interaction and may comprise touch-sensitive elements, temperature-sensitive elements, pressure-sensitive elements, scent-sensitive elements, and/or other elements which may produce feedback from a human user.

The module 1 may further comprise a power unit for providing electrical power, a control unit for controlling various components of the module, a communication unit (such as a transceiver or a receiver) for communication, preferably wirelessly, with other components of the system, friction elements (such as brakes) for providing variable friction under control of the control unit, and optionally (electrical) motors for providing propulsion under control of the control unit. In addition, an antenna and/or IR (infra-red) detector in conjunction with an IR LED may be provided for communication with the system. Alternatively, wired communication is possible. It will be understood that the module 1 may comprise further components which are not discussed here.

A system 100 is schematically depicted in Fig. 2. The system 100 comprises a processing unit (PU) 101, a memory unit (MU) 102, a transceiver unit (TU) 103 and a detection unit (DU) 104, as well as a haptic module 1.

The processing unit 101 may comprise a suitable microprocessor and associated circuits. The processing unit 101 is coupled with the memory unit 102, the transceiver unit 103 and the detection unit 104. The memory unit 102 may store a suitable model, that is, a representation of actual objects.

The transceiver unit 103 is capable of transmitting control signals CS to the module 1. The transceiver unit may operate using RF (radio frequency) waves or IR (infra-red) pulses, or may operate via a wire. The transceiver unit is provided with a suitable antenna or similar element (e.g. an IR receiver).

The detection unit 104 is capable of detecting the position and/or direction of the module 1 and preferably also of objects located on a surface. Based upon the locations of the module and the objects, the processing unit 101 may determine the distance of the module relative to the objects (and/or to the edges of the surface).

The model used by the system may for example be an urban model comprising building rules and regulations, such as the minimum distance between buildings, the minimum distance between a school and a major road or a factory, the maximum distance between a home for the elderly and a bus stop, and similar criteria. In such a model, the module may represent an item, such as a building, which is to be located on a site. The system processes the current position (and preferably also the current direction, when in motion) of the module and determines, using location-related criteria such as the ones mentioned above, whether the current position is desired (and preferably also, when in motion, whether the current direction is desired). The result of this determination is then fed back to the module and results in haptic feedback. When the module is in motion, force feedback may be positive (enhancing the motion by propulsion), negative (resisting the motion by friction), and/or corrective (adjusting the motion by propulsion or friction, combined with e.g. sideways propulsion and/or rotation of the module). Additional feedback may be provided with auditory, visual, tactile, olfactory and/or other feedback signals.

The model may combine the position and/or direction of the module with positions of other items (e.g. representing buildings, roads, canals, railway lines, etc.) and rules (e.g. building regulations, pollution regulations, noise regulations). This can be done, for example, by using a distance measure (e.g. linear distance or city block distance) and applying a cost function to distances, taking rules and regulations into account. Non-compliance with a building or zoning regulation will then typically incur a high cost, while compliance is associated with a low cost. Similarly, a large distance between an office building and a bus stop or parking lot will incur a high cost. The model may make a cost mapping (i.e., a two-dimensional cost function) and use the costs represented in that mapping to evaluate and, in necessary, adjust the position and/or the course of the module.

Some models will allow zooming in and/or out, thus rendering the spatial model in more or less detail. Advantageously, the system of the present invention may be capable of adjusting to such zooming and adjust its feedback. Although zooming in or out typically will not alter the underlying model or cost mapping, it may change the relative location of the (physical) module on the (virtual) model, thus making an adjustment necessary.

As mentioned above, the model may be a planning model, for example representing buildings, involving one or more maps or lay-outs of a city, an area, a building lot, or a building. The model may alternatively or additionally be an engineering design model, for example for designing a ship of a car.

A non-limiting example of the use of the module of the present invention is illustrated in Fig. 3, where a module 1 and objects 301 and 302 are located on a surface 200. This surface 200 preferably is a substantially horizontal touch screen capable of determining the locations of objects placed on its surface, but may also be a regular table top, in which case the module may be provided with a transponder or other device for determining its position. The module 1 may be moved by the hand of a user in its longitudinal direction, that is, in the direction of its longitudinal axis LA. Due to the proximity of the object 301, the system may want to "discourage" a movement which would bring the module 1 closer to the object 301 (in a typical example, the module 1 represents a school and the object 301 represents a garbage processing plant). To this end, the system may direct the module, using control signals CS, to resist movement in its longitudinal direction (LA) which propelling the module 1 in its transverse direction, that is, along its transverse axis (TA) (to the left in Fig. 3), thus steering clear of object 301.

The direction of the module 1 may not only be altered by linear movement (substantially along the longitudinal axis of the module) but also be rotation. It will be appreciated that rotation allows the direction to be changed without changing the position of the module. The module of a preferred embodiment essentially resists movement in one direction but assists movement in another direction. The angle between these directions may vary between 0⁰ and 180⁰: the module may, for example, assist forward movement but resist lateral movement (90º), or may resist forward movement but assist lateral movement (again 90º), or may resist forward movement but assist backward movement (180º).

The module 1 may not only be capable of changing course when guided by the hand of a user (by adding or resisting movement in specific directions) but may also operate autonomously in certain situations (if provided with propulsion). It will be understand that the module and system according to the present invention are also capable of providing haptic feedback in the absence of movement.

The present invention is based upon the insight that a haptic module may provide effective feedback by varying the friction it experiences when moving over a surface in dependence on its direction and/or position. The present invention benefits from the further insight that the feedback may be further enhanced by providing auxiliary propulsion in addition to the friction, so that the module essentially resist movement in one direction but assists movement in another direction. The present invention also benefits from the still further insight that the directions in which the movement is resisted or enhanced are determined by a spatial model.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A haptic module (1) for use in a modelling system (100), the module comprising contact elements (11) for contacting a surface (200) over which the module can be moved, the contact elements being arranged for providing direction-dependent friction in response to a control signal (CS) provided by the modelling system (100).

2. The module according to claim 1, wherein the contact elements (11) are further arranged for providing direction-dependent propulsion in response to the control signal (CS).

3. The module according to claim 1 or 2, wherein the contact elements (11) comprise at least one wheel, preferably at least two wheels.

4. The module according to claim 3, wherein the wheels are retractable.

5. The module according to any of the preceding claims, further provided with transducers (12) for providing haptic output signals, for example tactile signals, auditory signals, visual signals and/or olfactory signals, in response to an additional control signal (CS').

6. The module according to any of the preceding claims, further provided with sensors (13) for receiving haptic input signals, for example touch signals, temperature signals and/or olfactory signals.

7. The module according to claim 2, further arranged for moving independently.

8. The module according to any of the preceding claims, further arranged for rotating around an axis.

9. A modelling system (100), comprising a processing unit (101) with an associated memory unit (102), a transceiver unit (103) and a haptic module (1) according to any of the preceding claims, the transceiver unit being arranged for transmitting a control signal (CS) to the module.

10. The system according to claim 9, wherein the processing unit (101) is arranged for processing a representation of a model involving distances between objects, and for sending control signals (CS) to the module (1) in dependence on a distance between the module (1) and at least one object or on a position of the module (1) on the surface.

11. The system according to claim 10, further comprising a touch screen unit (105), preferably being arranged for operating in a substantially horizontal position.

12. The system according to claim 11, capable of rendering at least part of the model on the touch screen unit (105), wherein the system is capable of zooming in and/or out on the rendered model.

13. A haptic modelling method, comprising the steps of:
a) providing a system according to any of claims 9-12,
b) storing a model in the memory unit (102),
c) placing at least one object and at least one haptic module (1) on the surface (200), and
d) moving the haptic module relative to the object.

14. The method according to claim 15, further comprising the step of removing at least one object from the surface (200).

15. A computer program product for producing control signals (CS) in response to a position of a haptic module (1) in a system according to any of claims 9-12.
